# EUROPÄISCHE PATENTSCHRIFT

(11) **EP 3 766 154 B1**
(45) Veröffentlichungstag und Bekanntmachung des Hinweises auf die Patenterteilung: **13.04.2022**
(21) Anmeldenummer: 19730259.9
(22) Anmeldetag: 06.05.2019
(51) Int. Cl.: H02J 1/10, H02J 3/38, H02J 7/00

(54) **ELEKTRISCHES ENERGIEVERSORGUNGSNETZ UND DESSEN BETRIEB**
ELECTRICAL POWER SUPPLY NETWORK AND OPERATION THEREOF
RÉSEAU D'ALIMENTATION EN ÉNERGIE ÉLECTRIQUE ET PROCÉDÉ POUR LE FAIRE FONCTIONNER

(30) Priorität: 30.05.2018 DE 102018208619
(43) Veröffentlichungstag der Anmeldung: 20.01.2021
(73) Patentinhaber: Siemens Energy Global GmbH & Co. KG, 81739 München (DE)
(72) Erfinder: MARX, Walter, 90427 Nürnberg (DE)
(86) Internationale Anmeldenummer: PCT/EP2019/061509
(87) Internationale Veröffentlichungsnummer: WO 2019/228761

(56) Entgegenhaltungen:
- DE-A1-102008 022 077
- DE-A1-102014 212 934
- DE-A1-102016 215 762

## Beschreibung

Die Erfindung betrifft ein elektrisches Energieversorgungsnetz und dessen Betrieb. Das elektrische Energieversorgungsnetz ist beispielsweise ein Inselnetz.

Das elektrische Energieversorgungsnetz kann insbesondere stets überwiegend, oft oder nur selten, ein Inselnetz sein bzw. als Inselnetz betrieben sein. Inselnetze gibt es beispielsweise auf Schiffen, U-Booten, Bohrinseln oder in Krankenhäusern, etc. Als Energiequelle eines elektrischen Energieversorgungsnetzes kann eine Batterie vorgesehen sein, welche geladen und entladen werden kann.

Auf Schiffen, besonders U-Booten, welche ihre Energien insbesondere aus mehreren (Teil-)Batterien beziehen, gibt es die Anforderung, den Ladezustand der einzelnen Teilbatterien auf demselben Spannungslevel zu halten. Ein Potenzialunterschied zwischen den einzelnen, mindestens zwei Teilbatterien kann ein gewünschtes Zuschalten einer ersten Teilbatterie zu einer zweiten Teilbatterie verhindern. Um Potentialunterschiede zu verhindern, um also die Spannungslevels der Teilbatterien gleich zu halten, gibt es die Möglichkeit die zumindest zwei Teilbatterien durch einen Leistungsschalter zu kuppeln. Ferner können Verbraucher im elektrischen Energieversorgungsnetz über Dioden entkoppelt an Teilbatterien angeschlossen werden. Damit wird die benötigte Leistung immer aus der Teilbatterie gezogen, welche die höhere Spannung hat. Damit erfolgt nach einer gewissen Zeit immer eine Angleichung der Ladezustände. Anstelle von Batterien oder zur Ergänzung können als Energiespeicher im Inselnetz auch Brennstoffzellen-Kondensatoren wie Supercaps oder andere Speicher für elektrische Energie verwendet werden. Auch hier ist ein Ausgleich von Energieniveaus wünschenswert.

Ein Energieversorgungsnetz gemäß dem Oberbegriff des Anspruchs 1 ist aus dem Dokument DE 10 2014 212934 A1 sowie dem Dokument DE 10 2016 215762 A1 bekannt.

Aus der DE 10 2007 053 229 A1 ist ein U-Boot-Gleichstromnetz für ein U-Boot mit Hochleistungsenergiespeichern bekannt, welches zwei Teilnetze aufweist, die über eine Netzkupplung miteinander verbindbar oder verbunden sind, wobei jedes der Teilnetze zumindest einen Generator zur Erzeugung elektrischer Energie, zumindest eine Batterie zur Speicherung elektrischer Energie und als Energieverbraucher einen Motor zum Antrieb eines Propellers des U-Bootes aufweist, wobei die Batterie mehrere parallel geschaltete Batteriegruppen umfasst, die wiederum aus jeweils mehreren Strängen aus in Reihe geschalteten Hochleistungsenergiespeicher-Batteriezellen bestehen, wobei in jeden der Stränge jeweils ein stromanstiegsbegrenzendes Schutzelement geschaltet ist und/oder in Reihe zu jeder der Batteriegruppen jeweils ein Batteriegruppenschalter geschaltet ist, und wobei ein stromanstiegsbegrenzendes Schutzelement für die Summenkurzschlussströme mehrerer Batteriegruppen vorhanden ist.

Aus der DE 10 2004 036 727 A1 ist eine elektrische Maschine mit einer in Nuten montierten Wicklung, die zwei galvanisch voneinander getrennte, als Zweischicht-Stabwicklung ausgeführte Wicklungssysteme aufweist bekannt, wobei die Wicklungssysteme in den Nuten der elektrischen Maschine derart übereinander geschichtet sind, dass jede Nut vier Leiter aufweist, und jedes Wicklungssystem genau einem eigenen Versorgungssystem zugeordnet ist.

Aus der DE 10 2004 036 728 A1 ist ein Ständer für eine zweipolige elektrische Drehfeldmaschine mit einer Anzahl k galvanisch voneinander getrennter mehrphasiger Wicklungssysteme, wobei k größer oder gleich 2 ist und jedes Wicklungssystem die gleiche Anzahl an Strängen aufweist und jedes Wicklungssystem derart über den Ständer der Maschine verteilt ist, dass es eine im Wesentlichen gleichmäßig über den Umfang des Ständers verteilte Drehdurchflutung aufbaut.

Aus der DE 10 2008 022 077 A1 ist eine Schaltung zur Speisung einer Antriebsmaschine mit mehreren, vorzugsweise zwei Wicklungssystemen, insbesondere Drehstrom-Wicklungssystemen, bekannt, wobei jedem Wicklungssystem ein eigener Umrichter, vorzugsweise ein pulsweitenmodulierter Drehstrom-Umrichter mit Spannungszwischenkreis und einem vorgeschalteten Dioden-Gleichrichter, zugeordnet ist, wobei wenigstens ein Umrichter eingangsseitig mit verschiedenen, nicht synchronisierten Spannungsnetzen verbindbar ist.

Eine Aufgabe der Erfindung ist es ein elektrisches Energieversorgungsnetz anzugeben, bei welchem bei Energiespeichern ein Ausgleich der Energieniveaus und/oder Spannungsniveaus ermöglicht ist.

Die Aufgabe wird erfindungsgemäß durch die jeweiligen Gegenstände der unabhängigen Ansprüche 1 und 5 gelöst.

Jeweilige Ausgestaltungen ergeben sich insbesondere nach einem der abhängigen Ansprüche.

Ein elektrisches Energieversorgungsnetz weist einen ersten Energiespeicher und einen zweiten Energiespeicher auf. Energiespeicher können beispielsweise Batterie, Brennstoffzelle, Kondensator, insbesondere Supercaps, sein. Das elektrische Energieversorgungsnetz weist eine elektrische Maschine mit einem ersten Wicklungssystem und einem zweiten Wicklungssystem auf, wobei das erste Wicklungssystem mit dem ersten Energiespeicher elektrisch verbindbar ist. Hierfür ist beispielsweise eine erste Schalteinrichtung (mechanisch und/oder mit Halbleiter) vorgesehen. Das zweite Wicklungssystem ist mit dem zweiten Energiespeicher elektrisch verbindbar. Hierfür ist beispielsweise eine zweite Schalteinrichtung (mechanisch und/oder mit Halbleiter). Das elektrische Energieversorgungsnetz ist insbesondere ein Inselnetz. Insbesondere ist mittels des ersten Wicklungssystems der elektrischen Maschine ein erster Teilmotor der elektrischen Maschine ausgebildet und mittels des zweiten Wicklungssystem der elektrischen Maschine ein zweiter Teilmotor der elektrischen Maschine ausgebildet. Weist der Energiespeicher eine Batterie auf, kann diese mehrere Teilbatterien aufweisen. Die Batterie kann also auch modular aufgebaut sein. Das elektrische Energieversorgungsnetz weist insbesondere ein Fahrnetz auf, welches für ein Schiff oder ein U-Boot vorgesehen ist. Das Fahrnetz weist insbesondere ein erstes Fahrteilnetz und ein zweites Fahrteilnetz auf. Ein Potenzialunterschied zwischen den einzelnen, mindestens zwei Fahrteilnetzen kann ein Zuschalten der Fahrteilnetze zueinander verhindern und/oder erschweren. Insbesondere weist dabei das erste Fahrteilnetz den ersten Energiespeicher auf und das zweite Fahrteilnetz den zweiten Energiespeicher oder ist diesem jeweils zugeordnet.

In einer Ausgestaltung des elektrischen Energieversorgungsnetzes erfolgt ein Ausgleich von Batterieladezuständen bei ungekuppelten Batterien (Teilbatterien), beispielsweise auf einem U-Boot oder einem Schiff. Ein Motor welcher zumindest zwei Teilmotoren aufweist und beispielsweise in einem U-Boot als Antriebsmotor fungiert, kann durch unterschiedliche Leistungsaufnahme der Teilmotoren das Niveau der Ladezustände der Teilbatterien gleich halten. Dabei werden beispielsweise die Spannungen der Teilmotoren gemessen und die Differenz einem Ausgleichsregler zugeführt. Der Ausgang des Ausgleichsreglers wird beispielsweise mit dem Ausgang des Drehzahlreglers addiert und dieser Sollwert dem Teilmotor, welcher an der höheren Spannung liegt, zugeführt. Beim anderen Teilmotor, welcher an der niedrigeren Spannung liegt, wird der Ausgang des Ausgleichreglers vom Drehzahlregler subtrahiert und als Sollwert diesem Teilmotor zugeführt. So kann die Gesamtleistung an der Propellerwelle erhalten bleiben, nur die Leistungsaufnahme der Teilmotoren ist unterschiedlich. Der Motor, insbesondere der als Antriebsmotor für einen Propeller genutzte Motor, kann auch mehr als zwei Teilmotoren und/oder mehr als zwei Teilbatterien aufweisen.

Sind Teilbatterien mittels eines Leistungsschalters gekuppelte, kann es im Kurzschlussfall in einem Teilsystem zu einem Spannungseinbruch nahe Null im Gesamtsystem kommen. Dies kann dazu führen, dass Verbraucher abgeschaltet werden. Nach dem der Leistungsschalter das nicht vom Kurzschluss betroffene Netz (Teilnetz) abgeschaltet hat und die Spannung im fehlerfreien Netz wiederkehrt, müssen die Verbraucher des fehlerfreien Netzes entweder automatisch durch eine sogenannte Black-Out-Automatik oder händisch wieder zugeschaltet werden. Ist in diesem Fall, bei sehr hohen Kurzschlussströmen, konzeptbedingt zusätzlich zum Kuppelschalter noch eine Sicherung eingebaut werden, können die Netze auch nach Beseitigung des Kurzschlussfalles nicht mehr gekuppelt werden, solange diese Sicherung nicht ausgetauscht wurde. So eine Sicherung weist beispielsweise mehrere verschraubte NH-Sicherungseinsätze auf. Durch die Verbindbarkeit des ersten Energiespeichers mit dem ersten Wicklungssystem und dem zweiten Energiespeicher mit dem zweiten Wicklungssystem kann das beschriebene Problem behoben werden.

Sind Verbraucher im elektrischen Energieversorgungsnetz über Dioden entkoppelt an Teilbatterien angeschlossen verringert sich das Problem eines Kurzschlussfalles. Über die Dioden wird die benötigte Leistung immer aus der Teilbatterie gezogen, welche die höhere Spannung hat. Somit kann das Problem, dass es im Kurzschlussfall zu einem Spannungseinbruch des Gesamtsystems kommt umgangen werden. Allerdings fließt über die Dioden immer der komplette Verbraucherstrom, was zu einem Leistungsverlust über die Dioden und damit zu einem schlechteren Gesamtwirkungsgrad beispielsweise einer Fahranlage eines Schiffes oder U-Bootes führt. Zusätzlich führt dieser Leistungsverlust zu einer Wärmebildung, welche wiederum rückgekühlt werden muss, was wiederum zusätzliche Energie kostet.

In einer Ausgestaltung des elektrischen Energieversorgungsnetzes mit zumindest zwei Wicklungssystemen und den zumindest zwei Energiespeichern ist es beispielsweise möglich, Teilbatterien nicht gekuppelt zu fahren, wie auch einen Verbraucher oder eine Vielzahl von Verbrauchern nicht über Dioden an beide Teilbatterien anzuschließen, um die Sicherheit des Systems zu verbessern. Dies führt einerseits dazu, dass im Kurzschlussfall nur das betroffene Netz einen Spannungseinbruch hat und anderseits, dass es zu keinen zusätzlichen Verlusten beispielsweise in der Fahranlage kommt. Dies kann die Gesamtfahranlage sowohl sicherer als auch effizienter machen.

In einer Ausgestaltung des elektrischen Energieversorgungsnetzes ist der erste Energiespeicher mit dem zweiten Energiespeicher elektrisch trennbar oder elektrisch verbindbar. Hierfür ist insbesondere zumindest eine Schalteinrichtung (mechanisch und/oder mit Halbleiter) vorgesehen.

In einer Ausgestaltung des elektrischen Energieversorgungsnetzes weist dieses ein erstes Teilnetz und ein zweites Teilnetz auf. Insbesondere weist dabei das erste Teilnetz einen ersten DC-Bus aufweist, wobei das zweite Teilnetz einen zweiten DC-Bus aufweist, wobei der erste DC-Bus und der zweite DC-Bus miteinander direkt (gleiche Spannungsebene) koppelbar sind.

In einer Ausgestaltung des elektrischen Energieversorgungsnetzes weist das erste Teilnetz den ersten Energiespeicher zur Speicherung elektrischer Energie auf und das zweite Netzwerk den zweiten Energiespeicher zur Speicherung elektrischer Energie auf.

Erfindungsgemäß ist eine Ausgleichseinrichtung zur Veränderung der Energiespeicherzustände und/oder Ladezustände, des ersten Energiespeichers und/oder des zweiten Energiespeichers vorgesehen .

Erfindungsgemäß weist die Ausgleichseinrichtung einen Ausgleichsregler auf, wobei ein Ausgangssignal des Ausgleichsreglers mit einem drehzahlabhängigen Ausgangssignal eines weiteren Reglers gekoppelt ist und der gekoppelte Wert einer Regelung zur Bestromung des ersten Wicklungssystems und/oder des zweiten Wicklungssystems zugeführt ist.

In einer Ausgestaltung des elektrischen Energieversorgungsnetzes ist dem ersten Wicklungssystem der erste Energiespeicher zugeordnet und dem zweiten Wicklungssystem der zweite Energiespeicher zugeordnet. Insbesondere sind einer Vielzahl von Wicklungssystemen/Teilmotoren eine Vielzahl von Energiespeichern zugeordnet.

In einem Verfahren zum Betrieb eines elektrischen Energieversorgungsnetzes, welches einen ersten Energiespeicher, beispielsweise eine Batterie, eine Brennstoffzelle, etc., und einen zweiten Energiespeicher, beispielsweise eine Batterie, eine Brennstoffzelle, etc., aufweist, wobei das elektrische Energieversorgungsnetz eine elektrische Maschine mit einem ersten Wicklungssystem und einem zweiten Wicklungssystem aufweist, wird durch unterschiedliche Leistungsaufnahme der Wicklungssysteme das Energieniveau der Energiespeicher, abhängig vom Energiespeicher, verändert.

Erfindungsgemäß wird eine Ausgleichseinrichtung zur Veränderung der Energiespeicherzustände, insbesondere der Ladezustände, des ersten Energiespeichers und/oder des zweiten Energiespeichers verwendet, wobei die Ausgleichseinrichtung einen Ausgleichsregler aufweist.

Erfindungsgemäß wird der Ausgang des Ausgleichsreglers mit dem Ausgang eines Drehzahlreglers der elektrischen Maschine addiert und dieser Additionswert als ein Sollwert, ggf. einer von vielen Sollwerten eines Teilmotors bzw. eines Wicklungssystems, einer Regelung der elektrischen Maschine zugeführt.

In einer Ausgestaltung des Verfahrens wird der Sollwert dem Teilmotor zugeführt, welcher an der höheren Spannung liegt.

In einer Ausgestaltung des Verfahrens wird bei einem Teilmotor der elektrischen Maschine der Ausgang des Ausgleichsreglers vom Ausgang des Drehzahlreglers der elektrischen Maschine subtrahiert und dieser Subtraktionswert als ein Sollwert verwendet.

In einer Ausgestaltung des Verfahrens wird bei einem Teilmotor der elektrischen Maschine, welcher an einer niedrigeren Spannung liegt, als ein anderer Teilmotor der elektrischen Maschine, der Ausgang des Ausgleichsreglers vom Ausgang des Drehzahlreglers der elektrischen Maschine subtrahiert und dieser Subtraktionswert als ein Sollwert dem Teilmotor der elektrischen Maschine, der an der niedrigeren Spannung liegt, zugeführt.

In einer Ausgestaltung des Verfahrens werden die Energiespeicher ungekuppelt betrieben.

In einer Ausgestaltung des Verfahrens werden die Energiespeicher in einem Kurzschlussfall voneinander getrennt betrieben.

In einer Ausgestaltung des Verfahrens wird ein elektrisches Energieversorgungsnetz einer der beschriebenen Art verwendet.

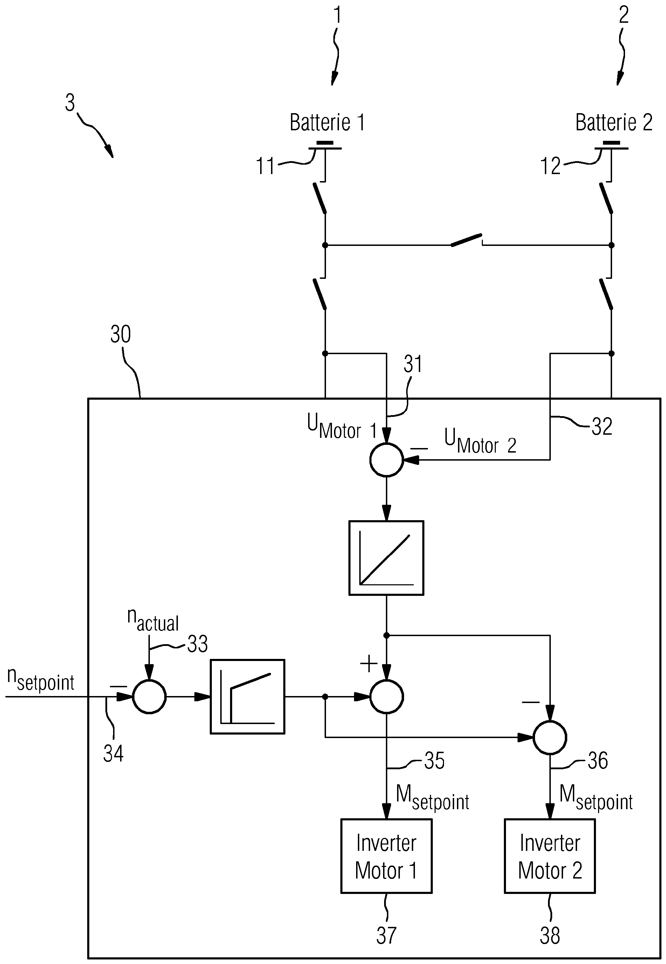

Die Erfindung sowie weitere Ausgestaltungen der Erfindung werden im Folgenden anhand eines Ausführungsbeispieles in der Figur exemplarisch erläutert.

Die Figur zeigt ein elektrisches Energieversorgungsnetz 3, mit einem ersten Energiespeicher 11 in einem ersten Teilnetz 1 und einem zweiten Energiespeicher 12 in einem zweiten Teilnetz 2. Eine Ausgleichseinrichtung 30 ist zur Veränderung der Energiespeicherzustände des ersten Energiespeichers 11 und des zweiten Energiespeichers 12 vorgesehen. Die Ausgleichseinrichtung 30 weist als ein erstes Eingangssignal 31 die Istspannung U_{Motor1} eines ersten Wicklungssystems eines ersten Teilmotors auf und als ein zweites Eingangssignal 32 die Istspannung U_{Motor2} eines zweiten Wicklungssystems eines zweiten Teilmotors auf. Die Spannungen werden subtrahiert und einem Reglerglied zugeführt. Die Ausgleichseinrichtung 30 weist als ein drittes Eingangssignal 33 einen Drehzahlistwert n_{actual} und als ein viertes Eingangssignal 34 einen Drehzahlsollwert nₛₑₜ₋ₚₒᵢₙₜ auf. Auch diese Werte werden subtrahiert und einem weiteren Reglerglied zugeführt. Die Ausgänge der Reglerglieder werden miteinander verknüpft, um einen ersten Drehzahlsollwert 35 (Mₛₑₜₚₒᵢₙₜ) für einen ersten Stromrichter 37 für das erste Wicklungssystem für einen ersten Motor zu erhalten. Die Ausgänge der Reglerglieder werden ferner miteinander verknüpft, um einen zweiten Drehzahlsollwert 36 (Mₛₑₜₚₒᵢₙₜ) für einen zweiten Stromrichter 38 für ein zweites Wicklungssystem für einen zweiten Motor zu erhalten.

## Patentansprüche

1. Elektrisches Energieversorgungsnetz (3), insbesondere Inselnetz, mit einem ersten Energiespeicher (11) und einem zweiten Energiespeicher (12), wobei das elektrische Energieversorgungsnetz (3) eine elektrische Maschine mit einem ersten Wicklungssystem und einem zweiten Wicklungssystem aufweist, wobei das erste Wicklungssystem mit dem ersten Energiespeicher (11) elektrisch verbindbar ist und wobei das zweite Wicklungssystem mit dem zweiten Energiespeicher (12) elektrisch verbindbar ist, und mit einer Ausgleichseinrichtung zur Veränderung der Energiespeicherzustände des ersten Energiespeichers (11) und/oder des zweiten Energiespeichers (12), **dadurch gekennzeichnet, dass** die Ausgleichseinrichtung einen Ausgleichsregler aufweist, wobei ein Ausgangssignal des Ausgleichsreglers mit einem drehzahlabhängigen Ausgangssignal eines weiteren Reglers des Energieversorgungsnetzes gekoppelt ist und der gekoppelte Wert einer Regelung zur Bestromung des ersten Wicklungssystems und/oder des zweiten Wicklungssystems zugeführt ist.

2. Elektrisches Energieversorgungsnetz (3) nach Anspruch 1, wobei der erste Energiespeicher (11) mit dem zweiten Energiespeicher (12) elektrisch trennbar oder elektrisch verbindbar ist.

3. Elektrisches Energieversorgungsnetz (3) nach Anspruch 1 oder 2, mit einem ersten Teilnetz (1) und einem zweiten Teilnetz (2), wobei das erste Teilnetz (1) den ersten Energiespeicher (11) zur Speicherung elektrischer Energie aufweist und das zweite Netzwerk (2) den zweiten Energiespeicher (12) zur Speicherung elektrischer Energie aufweist.

4. Elektrisches Energieversorgungsnetz (3) nach einem der Ansprüche 1 bis 3, wobei dem ersten Wicklungssystem der erste Energiespeicher (11) zugeordnet ist und dem zweiten Wicklungssystem der zweite Energiespeicher (12) zugeordnet ist.

5. Verfahren zum Betrieb eines elektrischen Energieversorgungsnetzes (3), welches einen ersten Energiespeicher (11) und einen zweiten Energiespeicher (12) aufweist, wobei das elektrische Energieversorgungsnetz (3) eine elektrische Maschine mit einem ersten Wicklungssystem und einem zweiten Wicklungssystem aufweist, wobei durch unterschiedliche Leistungsaufnahme der Wicklungssysteme das Energieniveau der Energiespeicher abhängig vom Energiespeicher verändert wird, wobei eine Ausgleichseinrichtung zur Veränderung der Energiespeicherzustände des ersten Energiespeichers und/oder des zweiten Energiespeichers einen Ausgleichsregler aufweist, **dadurch gekennzeichnet, dass** der Ausgang des Ausgleichsreglers mit dem Ausgang eines Drehzahlreglers der elektrischen Maschine addiert wird, und dieser Additionswert als ein Sollwert eines Teilmotors der elektrischen Maschine zugeführt wird.

6. Verfahren nach Anspruch 5, wobei der Sollwert dem Teilmotor zugeführt wird, welcher an der höheren Spannung liegt.

7. Verfahren nach einem der Ansprüche 5 oder 6, wobei bei einem Teilmotor der elektrischen Maschine, der Ausgang des Ausgleichsreglers vom Ausgang des Drehzahlreglers der elektrischen Maschine subtrahiert wird und dieser Subtraktionswert als ein Sollwert verwendet wird.

8. Verfahren nach einem der Ansprüche 5 bis 7, wobei bei dem Teilmotor der elektrischen Maschine, welcher an einer niedrigeren Spannung liegt, als ein anderer Teilmotor der elektrischen Maschine, der Ausgang des Ausgleichsreglers vom Ausgang des Drehzahlreglers der elektrischen Maschine subtrahiert wird und dieser Subtraktionswert als ein Sollwert dem Teilmotor der elektrischen Maschine, der an der niedrigeren Spannung liegt, zugeführt wird.

9. Verfahren nach einem der Ansprüche 5 bis 8, wobei die Energiespeicher ungekuppelt betrieben werden.

10. Verfahren nach einem der Ansprüche 5 bis 9, wobei die Energiespeicher in einem Kurzschlussfall voneinander getrennt betrieben werden.

11. Verfahren nach einem der Ansprüche 5 bis 10, wobei ein elektrisches Energieversorgungsnetz (3) nach einem der Ansprüche 1 bis 4 verwendet wird.

## Claims

1. Electrical energy supply network (3), in particular island network, comprising a first energy store (11) and a second energy store (12), wherein the electrical energy supply network (3) comprises an electric machine comprising a first winding system and a second winding system, wherein the first winding system can be electrically connected to the first energy store (11) and wherein the second winding system can be electrically connected to the second energy store (12), and comprising a balancing device for changing the energy store states of the first energy store (11) and/or of the second energy store (12), **characterized in that** the balancing device comprises a balancing controller, wherein an output signal of the balancing controller is coupled to a rotational-speed-dependent output signal of a further controller of the energy supply network and the coupled value is supplied to a control system for energizing the first winding system and/or the second winding system.

2. Electrical energy supply network (3) according to Claim 1, wherein the first energy store (11) can be electrically isolated from or electrically connected to the second energy store (12).

3. Electrical energy supply network (3) according to Claim 1 or 2, comprising a first subnetwork (1) and a second subnetwork (2), wherein the first subnetwork (1) comprises the first energy store (11) for storing electrical energy and the second network (2) comprises the second energy store (12) for storing electrical energy.

4. Electrical energy supply network (3) according to one of Claims 1 to 3, wherein the first energy store (11) is assigned to the first winding system and the second energy store (12) is assigned to the second winding system.

5. Method for operating an electrical energy supply network (3), which comprises a first energy store (11) and a second energy store (12), wherein the electrical energy supply network (3) comprises an electric machine comprising a first winding system and a second winding system, wherein the energy level of the energy stores is changed according to the energy store by way of different power consumption of the winding systems, wherein a balancing device for changing the energy store states of the first energy store and/or of the second energy store comprises a balancing controller, **characterized in that** the output of the balancing controller is added to the output of a rotational speed controller of the electric machine, and this addition value is supplied as a setpoint value of a motor element of the electric machine.

6. Method according to Claim 5, wherein the setpoint value is supplied to the motor element that is at the higher voltage.

7. Method according to one of Claims 5 or 6, wherein, in a motor element of the electric machine, the output of the balancing controller is subtracted from the output of the rotational speed controller of the electric machine and this subtraction value is used as a setpoint value.

8. Method according to one of Claims 5 to 7, wherein, in the motor element of the electric machine that is at a lower voltage than another motor element of the electric machine, the output of the balancing controller is subtracted from the output of the rotational speed controller of the electric machine and this subtraction value is supplied as a setpoint value to the motor element of the electric machine that is at the lower voltage.

9. Method according to one of Claims 5 to 8, wherein the energy stores are operated in an uncoupled manner.

10. Method according to one of Claims 5 to 9, wherein the energy stores are operated in a manner isolated from one another in the event of a short circuit.

11. Method according to one of Claims 5 to 10, wherein an electrical energy supply network (3) according to one of Claims 1 to 4 is used.

## Revendications

1. Réseau (3) d'alimentation en énergie électrique, notamment réseau isolé, comprenant un premier accumulateur (11) d'énergie et un deuxième accumulateur (12) d'énergie, dans lequel le réseau (3) d'alimentation en énergie électrique a une machine électrique ayant un premier système d'enroulement et un deuxième système d'enroulement, dans lequel le premier système d'enroulement peut être connecté électriquement au premier accumulateur (11) d'énergie et dans lequel le deuxième système d'enroulement peut être connecté électriquement au deuxième accumulateur (12) d'énergie, et comprenant un dispositif de compensation pour la modification des états du premier accumulateur (11) et/ou du deuxième accumulateur (12) d'énergie, **caractérisé en ce que** le dispositif de compensation a un régleur de compensation, dans lequel un signal de sortie du régleur de compensation est couplé à un signal de sortie, en fonction de la vitesse de rotation, d'un autre régleur du réseau d'alimentation en énergie et la valeur couplée est envoyée à une régulation pour l'alimentation en courant du premier système d'enroulement et/ou du deuxième système d'enroulement.

2. Réseau (3) d'alimentation en énergie électrique suivant la revendication 1, dans lequel le premier accumulateur (11) d'énergie peut être séparé électriquement du deuxième accumulateur (12) d'énergie ou peut être connecté électriquement au deuxième accumulateur (12) d'énergie.

3. Réseau (3) d'alimentation en énergie électrique suivant la revendication 1 ou 2, comprenant un premier réseau (1) partiel et un deuxième réseau (2) partiel, dans lequel le premier réseau (1) partiel a le premier accumulateur (11) d'énergie pour l'accumulation d'énergie électrique et le deuxième réseau (2) partiel a le deuxième accumulateur (12) d'énergie pour l'accumulation d'énergie électrique.

4. Réseau (3) d'alimentation en énergie électrique suivant l'une des revendications 1 à 3, dans lequel le premier accumulateur (11) d'énergie est affecté au premier système d'enroulement et le deuxième accumulateur (12) d'énergie est affecté au deuxième système d'enroulement.

5. Procédé pour faire fonctionner un réseau (3) d'alimentation en énergie électrique, qui a un premier accumulateur (11) d'énergie et un deuxième accumulateur (12) d'énergie, dans lequel le réseau (3) d'alimentation en énergie électrique a une machine électrique ayant un premier système d'enroulement et un deuxième système d'enroulement, dans lequel, par des absorptions de puissance différentes des systèmes d'enroulement, on modifie le niveau d'énergie de l'accumulateur d'énergie en fonction de l'accumulateur d'énergie, dans lequel un dispositif de compensation, pour modifier les états du premier accumulateur d'énergie et/ou du deuxième accumulateur d'énergie, a un régleur de compensation,
**caractérisé en ce que** l'on additionne le signal de sortie du régleur de compensation au signal de sortie d'un régleur de vitesse de rotation de la machine électrique et on envoie cette valeur d'addition comme valeur de consigne à un moteur partiel de la machine électrique.

6. Procédé suivant la revendication 5, dans lequel on envoie la valeur de consigne au moteur partiel, qui se trouve à la tension plus haute.

7. Procédé suivant l'une des revendications 5 ou 6, dans lequel, pour un moteur partiel de la machine électrique, on soustrait le signal de sortie du régleur de compensation du signal de sortie du régleur de la vitesse de rotation de la machine électrique et on utilise cette valeur de soustraction comme valeur de consigne.

8. Procédé suivant l'une des revendications 5 à 7, dans lequel, pour le moteur partiel de la machine électrique, qui se trouve à une tension plus basse qu'un autre moteur partiel de la machine électrique, on soustrait le signal de sortie du régleur de compensation du signal de sortie du régleur de la vitesse de rotation de la machine électrique et on envoie cette valeur de soustraction comme valeur de consigne au moteur partiel de la machine électrique, qui se trouve à la tension plus basse.

9. Procédé suivant l'une des revendications 5 à 8, dans lequel on fait fonctionner les accumulateurs d'énergie d'une manière non couplée.

10. Procédé suivant l'une des revendications 5 à 9, dans lequel on fait fonctionner séparément l'un de l'autre les accumulateurs d'énergie dans un cas de court-circuit.

11. Procédé suivant l'une des revendications 5 à 10, dans lequel on utilise un réseau (3) d'alimentation en énergie électrique suivant l'une des revendications 1 à 4.
